Europäisches Patentamt

European Patent Office

Office européen des brevets

(19)

(11) **EP 1 037 012 B1**

(12) **EUROPEAN PATENT SPECIFICATION**

(45) Date of publication and mention
of the grant of the patent:
**14.07.2004 Bulletin 2004/29**

(51) Int Cl.$^7$: **G01B 11/06**, G01B 11/04

(21) Application number: **99105405.7**

(22) Date of filing: **16.03.1999**

(54) **Method and apparatus for measurements of patterned structures**

Verfahren und Vorrichtung zum Messen von Musterstrukturen

Procédé et dispositif pour mesurer des structures à dessins

(84) Designated Contracting States:
**DE FR GB**

(43) Date of publication of application:
**20.09.2000 Bulletin 2000/38**

(73) Proprietor: **Nova Measuring Instruments Limited Rehovot 76100 (IL)**

(72) Inventors:
• **Scheiner, David**
  **Ganei Yehuda 56905 (IL)**

• **Finarov, Moshe**
  **Rehovot 76470 (IL)**

(74) Representative: **Grünecker, Kinkeldey, Stockmair & Schwanhäusser Anwaltssozietät Maximilianstrasse 58 80538 München (DE)**

(56) References cited:
**US-A- 4 555 767      US-A- 4 999 508
US-A- 5 450 205      US-A- 5 604 581
US-A- 5 900 633**

EP 1 037 012 B1

**Description**

**FIELD OF THE INVENTION**

This invention is in the field of measurement techniques and relates to a method and a system for measuring the parameters of patterned structures.

**BACKGROUND OF THE INVENTION**

Techniques for thickness measurements of patterned structures have been developed. The term "*patterned structure*" used herein, signifies a structure formed with regions having different optical properties with respect to an incident radiation. More particularly, a patterned structure represents a grid having one or more cycles, each cycle being formed of at least two different locally adjacent stacks. Each stack is comprised of layers having different optical properties.

Production of integrated circuits on semiconductor wafers requires maintaining tight control over the dimensions of small structures. Certain measuring techniques enable the local dimensions of a wafer to be measured with relatively high resolution, but at the expense of discontinued use of the wafer in production. For example, inspection using a scanning electron microscope gives measurements of the parameters of a patterned structure, but at the expense of cleaving it and thus excluding it from continued processing. Mass production of patterned structures such as wafers requires a non-destructive process for controlling thin film parameters in a manner enabling the local measurements to be performed.

One kind of the conventional techniques for measuring thickness of thin films is disclosed in U.S. Patent No. 4,999,014. The technique is based on the use of small spot size and large numerical aperture for measurements on small areas. Unfortunately, in the case of a very small structure, this approach suffers from a common drawback associated, on the one hand, with the use of a small spot-size and, on the other hand, owing to the large numerical aperture, with the collection of high diffraction orders. The term "*small spot-size*" signifies the spot diameter similar in size to the line or space width of the measured structure, i.e. a single grid cycle. This leads to various problems, which are difficult to solve. Indeed, not all the stacks' layers are in the focus of an optical system used for collecting reflected light, the optical system being bulky and complicated. Detected signals are sensitive to small details of a grid profile and to small deviations in the spot placement. Diffraction effects, which depend significantly on the grid profile and topography and therefore are difficult to model, have to be included in calculations.

Another example of the conventional techniques of the kind specified is disclosed in U.S. Patent No. 5,361,137 and relates to a method and an apparatus for measuring the submicron linewidths of a patterned structure. The measurements are performed on a so-called "test pattern" in the form of a diffraction grating, which is placed in a test area of the wafer. Here, as in most conventional systems, a monochromatic incident light is employed and diffraction patterns are produced and analyzed. However, a large number of test areas are used and also information on multiple parameters cannot be obtained.

According to some conventional techniques, for example that disclosed in U.S. Patent No. 5,087,121, portions with and without trenches are separately illuminated with broadband light, the reflection spectrum is measured and corresponding results are compared to each other with the result being the height or depth of a structure. However, it is often the case that the structure under inspection is such that the different portions cannot be separately imaged. This is owing to an unavoidable limitation associated with the diameter of a beam of incident radiation striking the structure.

The above approach utilizes frequency filtering to enable separation of interference signals from different layers. This is not feasible for layers of small thickness and small thickness difference because of a limited number of reflection oscillations.

Yet another example of the conventional technique for implementing depth measurements is disclosed in U. S. Patent No. 5,702,956. The method is based on the use of a test site that represents a patterned structure similar to that of the wafer (circuit site), but taken in an enlarged scale. The test site is in the form of a plurality of test areas each located in the space between two locally adjacent circuit areas. The test areas are designed so as to be large enough to have a trench depth measured by an in-line measuring tool. The measurements are performed by comparing the parameters of different test areas assuming that the process is independent of feature size. For many processes in the field such as etching and photoresist development, this assumption is incorrect and this method is therefor inapplicable.

**SUMMARY OF THE INVENTION**

It is a major object of the present invention to overcome the above listed and other disadvantages of the conventional techniques and provide a novel method and system for non-destructive, non-contact measurements of the parameters of patterned structures.

It is a further object of the invention to provide such a method and system that enables the relatively small amount of information representative of the structure's conditions to be obtained and successfully processed for carrying out the measurements, even of very complicated structures.

According to one aspect of the present invention, there is provided a method for measuring at least one desired parameter of a patterned structure which comprises a grid having at least one cycle formed of at least two locally adjacent stacks having different optical properties in respect of an incident radiation, the structure having a plurality of features defined by a certain process of its manufacturing, the method comprising the steps of:

(a) providing an optical model based on at least some of said features of the structure and capable of determining theoretical data representative of photometric intensities of light components of different wavelengths specularly reflected from the structure and of calculating said at least one desired parameter of the structure;
(b) illuminating a measurement area by an incident radiation of a preset substantially wide wavelength range, the measurement area being substantially larger than a surface area of the structure defined by the grid cycle;
(c) detecting light reflected from the illuminated part substantially at zero-order and obtaining measured data representative of photometric intensities of each wavelength within said wavelength range;
(d) analyzing the measured and theoretical data for optimizing said optical model until the theoretical data satisfies a predetermined condition; and
(e) upon detecting that the predetermined condition is satisfied, calculating said at least one parameter of the structure.

Thus, the main idea of the present invention consists of the following. A patterned structure, whose parameters are to be measured, is manufactured by several sequential steps of a certain technological process completed prior to the measurements. Actual design-rule features can often be found in the structure in sets (e.g. read lines in memories). The term "*design-rule features*" signifies a predetermined set of the allowed pattern dimensions used throughout the wafer. Hence, information regarding the desired parameters can be obtained using super-micron tools such as a large spot focused on a set of lines.

The present invention, as distinct from the conventional approach, utilizes a spectrophotometer that receives reflected light substantially from zero-order. The zero-order signal is not sensitive to small details of the grid profile of the structure such as edge rounding or local slopes. This enables the effects associated with diffracted light not to be considered, and thereby the optical model, as well as the optical system, to be simplified. Moreover, the large spot-size enables large depth of focus that includes the whole depth of the structure to be measured. When the spot includes a number of grid cycles, then the measurement is insensitive to local defects, exact spot placement or focusing.

In the case of wafers, each such element in the grid cycle consists of a stack of different layers. The features of such a structure (wafer), which are dictated by the manufacturing process and should be considered by the optical model, may be representative of the following known effects:

- specular reflection from the different stacks within the grid cycle;
- interference of reflected light from layers within each stack;
- dissipation within transparent stacks due to cavity-like geometry formed in the grid-like structure;
- specular contributions due to width of stacks relative to the wavelength;
- polarization due to the incident beam interaction with a conductive grid-like structure, if present;
- effects due to limited coherence of illumination;
- interference between light beams reflected from each stack within the grid cycle, taking into account the above effects.

The contribution of each of the above effects into the theoretical data are estimated in accordance with the known physical laws.

The optical model, being based on some of the features, actually requires certain optical model factors to be considered in order to perform precise calculations of the desired parameters. If information of all the features is not available and the model cannot be optimized prior to the measurements, this is done by means of a so-called initial "learning" step. More specifically, there are some optical model factors which, on the one hand, depend variably on all the features and, on the other hand, define the contribution of each of the existing optical effects into the detected signal. The values of these optical model factors are adjusted along with the unknown desired parameters during the learning step so as to satisfy the predetermined condition. The latter is typically in the form of a merit function defining a so-called "goodness of fit" between the measured and theoretical data. The resulting optical model factors can consequently be used in conjunction with known features to enable precise calculations of the desired parameters of the structure.

Preferably, the measurement area is the part of the structure to be measured. Alternatively, the measurement area is located on a test pattern representative of the actual structure to be measured, namely having the same design rules and layer stacks. The need for such a test pattern may be caused by one of the following two reasons:

1) If the measurement area is not substantially smaller than the available surface area defined by the actual structure to be measured, then the test site is implemented so as to include an extended structure;

2) If the structure is very complicated or consists of ambiguous under-layer structure, then the test site is implemented with the same geometry as that of the actual structure to be measured, but with a simplified under-layer design, thus allowing simplified measurements of the top layers.

According to another aspect of the present invention, there is provided an apparatus for measuring at least one desired parameter of a patterned structure that represents a grid having at least one grid cycle formed of at least two locally adjacent elements having different optical properties in respect of an incident radiation, the structure having a plurality of features defined by a certain process of its manufacturing, the apparatus comprising:

a spectrophotometer illuminating a measurement area by an incident radiation of a preset substantially wide wavelength range and detecting a specular reflection light component of light reflected from the measurement area for providing measured data representative of photometric intensities of detected light within said wavelength range, wherein the measurement area is substantially larger than a surface area of the structure defined by the grid cycle; and

a processor unit coupled to the spectrophotometer, the processor unit comprising a pattern recognition software and a translation means so as to be responsive to said measured data and locate measurements, the processor being adapted for

applying an optical model based on at least some of said features of the structure for providing theoretical data representative of photometric intensities of light specularly reflected from the structure within said wavelength range and calculating said at least one desired parameter, and

comparing said measured and theoretical data and detecting whether the theoretical data satisfies a predetermined condition.

Preferably, the spectrophotometer is provided with an aperture stop accommodated in the optical path of the specular reflected light component. The diameter of the aperture stop is set automatically according to the grid cycle of the measured structure.

Preferably, the incident radiation and the reflected light received by the detector are directed along substantially specular reflection axes.

More particularly, the invention is concerned with measuring height/depth and width dimensions on semiconductor wafers and is therefore described below with respect to this application.

## BRIEF DESCRIPTION OF THE DRAWINGS

In order to understand the invention and to see how it may be carried out in practice, a preferred embodiment will now be described, by way of non-limiting example only, with reference to the accompanying drawings, in which:

**Figs. 1a and 1b** are, respectively, schematic cross-sectional and top views of one kind of a patterned structure to be measured; **Fig. 2** schematically illustrates the main components of an apparatus according to the invention for measuring the parameters of a patterned structure;

**Fig. 3** is a graphical illustration of the main principles of the present invention, showing the relationship between measured and theoretical data obtained by the apparatus of Fig. 2;

**Fig. 4** illustrates yet another example of a patterned structure to be measured with the apparatus of Fig. 3;

**Figs. 5a and 5b** illustrate a flow diagram of the main steps of a method according to the invention; and

**Figs. 6 to 10** are schematic cross-sectional views of five more examples of patterned structures suitable to be inspected by the apparatus of Fig. 2.

## DETAILED DESCRIPTION OF A PREFERRED EMBODIMENT

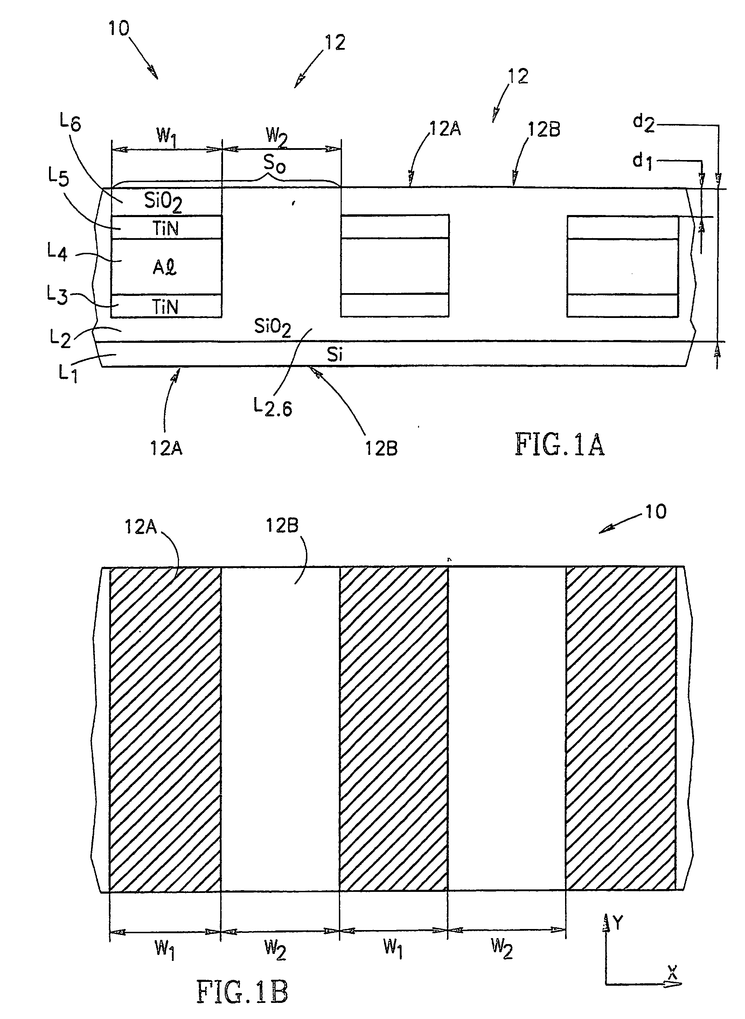

Referring to Figs. 1a and 1b, there are partly illustrated a cross-section and a top view, respectively, of a grid-like wafer structure, generally designated **10**, whose parameters are to be measured. The structure is formed of a plurality of cells, generally at **12**, each constituting a grid cycle. Only three adjacent cells **12** are demonstrated in the present example with only two stacks (or elements) in each cell in order to simplify the illustration. Thus, the cell **12** comprises two stacks **12a** and **12b** formed of different layers. More specifically, the stack **12a** includes six layers $L_1$-$L_6$, wherein the layers $L_1$ and $L_2$ and the layer $L_6$ form two layers $L_1$ and $L_{2,6}$, respectively, of the stack **12b**. As known in the conventional semiconductor devices, semiconductor structures such as sources, drains and gate electrodes, capacitors, etc. are formed in and on a semiconductor substrate (layer $L_1$) typically made of silicon material and including metal conductors (e.g. aluminum). The substrate is coated by an insulating silicon oxide compound (layer $L_2$). The first level metal layer $L_4$ (and the single level in the present example) is formed, being interposed between top and bottom barrier layer $L_3$ and $L_5$ made of titanium nitride (TiN). Deposition coating of an uppermost insulating silicon oxide layer $L_6$ and subsequent chemical mechanical polishing (CMP), consisting of thinning the uppermost layer $L_6$, completes the manufacturing. The construction of such a structure and method of its manufacturing are known *per se* and therefore need not be more specifically described.

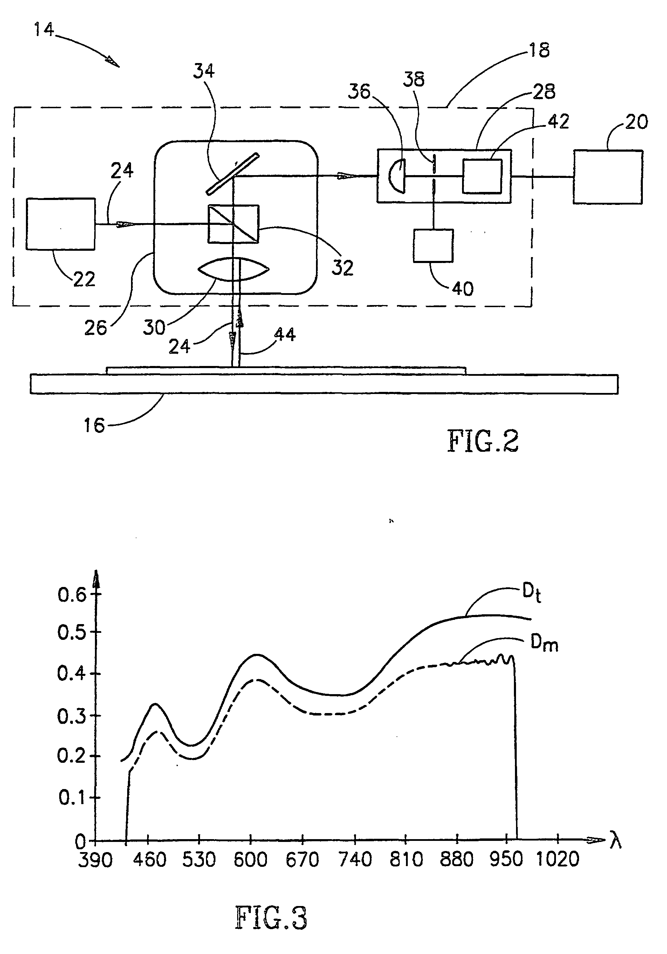

According to this specific example, the parameters to be measured are the widths $W_1$ and $W_2$ of the stacks **12a** and **12b** and depths $d_1$ and $d_2$ of the uppermost silicon oxide layers $L_6$ and $L_{2,6}$, respectively. It is appreciated that any other parameters of the patterned structure such as, for example, materials and their optical properties, can be measured.Reference is now made to Fig. 2 illustrating a system, generally designated **14**, suitable for carrying out the measurements. The system **14** may represent one of the working stations of a production line (not shown), the wafers **10** progressing between upstream and downstream stations of the production line. The system **14** comprises a support frame **16** for holding the structure **10** within an inspection plane, a spectrophotometer **18** and a processor unit **20** connected thereto. The spectrophotometer **18** typically includes a light source **22** for generating a beam of light **24** of a predetermined wavelength range, light directing optics **26** and a detector unit **28**. The light directing optics **26** are typically in the form of a beam deflector comprising an objective lens **30**, a beam splitter **32** and a mirror **34**. The detector unit **28** typically comprises an imaging lens **36**, a variable aperture stop **38** coupled to and operated by its motor **40** and a spectrophotometric detector **42**. The construction and operation of the spectrophotometer **18** may be of any known kind, for example, such as disclosed in U.S. Patent No. 5,517,312 assigned to the assignee of the present application. Therefore, the spectrophotometer **18** need not be more specifically described, except to note the following.

The light beam **24** passes through the light directing optics **26** and impinges onto the structure **10** at a certain location defining a measurement area $S_1$. Light component **44** specularly reflected from the reflective regions within the area $S_1$ is directed onto the detector unit **28**.

It should be noted that, generally, the illuminated location of the structure may be larger than the measurement area $S_1$, in which case suitable optics are provided for capturing, in a conventional manner, light reflected solely from the part (area $S_1$) within the illuminated location. In other words, the measurement area being of interest is included into a spot-size provided by the light beam **24** when impinging onto the structure **10**. In order to facilitate understanding, assume that the illuminated area defined by the diameter of the incident beam constitutes the measurement area $S_1$.

The light directing optics **26** and detector unit **28** are designed such that only a zero-order light component of light reflected from the structure **10** is sensed by the spectrophotometric detector **42**. The construction is such that the incident and detected light beams are directed substantially parallel to each other and substantially perpendicular to the surface of the structure **10**. The diameter of the aperture stop **38** is variable and is set automatically according to the grid cycle of the measured structure. Generally speaking, the diameter of the aperture stop is optimized to collect the maximum reflected intensity excluding diffraction orders.

Additionally, the diameter of the incident beam **24**, defining the measurement area $S_1$, is substantially larger than the surface area $S_0$ defined by the cell **12**, that is:

$$S_1 > S_0$$

According to this specific example, the patterned structure **10** is a so-called "one-dimensional" structure. As clearly seen in Fig. 1b, the stacks **12a** and **12b** are aligned along the **X**-axis, while along the **Y**-axis the stacks continue to infinity (uniform structure) with respect to the measurement area $S_1$. In other words, the measurement area $S_1$ includes a structure that has one or more grid cycles extending along the **X**-axis and is uniform along the **Y**-axis.

The whole surface area **S** of the structure under inspection should be substantially larger than the measurement area $S_1$ defined by the diameter of the incident beam.

$$S > S_1$$

The case may be such that the above conditions are not available in the structure **10**. For example, the structure may contain a single grid cycle. To this end, the measurement area $S_1$ consisting of more than one cell **12** should be located on a test-site (not shown).

For example, if the system **14** provides the numerical aperture of 0.2 and spot-diameter (measurement area $S_1$) about 15μm, the minimum surface area **S** of a test-site should be 20μm. NovaScan 210 spectrophotometer, commercially available from Nova Measuring Instruments Ltd., Israel, may be used in the system **14**.

The spectrophotometer **18** measures the photometric intensities of different wavelengths contained in the detected, zero-order light component of the reflected beam **44**. This is graphically illustrated in Fig. 3, being shown as a dashed curve $D_m$ constituting the measured data. The processor unit **20** comprises a pattern recognition software and a translation means so as to be responsive to the measured data and locate measurements. It is pre-programmed by a certain optical model based on at least some features of the structure for calculating theoretically the photometric intensities of light of different wavelengths reflected from a patterned structure. This is shown in Fig. 3 as a solid curve $D_t$, constituting theoretical data

In order to design the optical model capable of estimating all the possible optical effects, which are dictated by the features of the structure to be measured and affect the resulting data, the following should be considered.

Generally, total specular reflection **R** from the grid-like structure is formed of a coherent part $R_{coh}$ and an incoherent part $R_{incoh}$. It is known that coherence effects play an essential role in the measurements when a wide bandwidth radiation is used. The coherence length **L** of light in the optical system is determined by the radiation source and by the optical system (spectrophotometer) itself. Reflection amplitudes from structure's features smaller than the coherence length interact coherently, producing thereby interference effects between light reflected by different stacks of the cell. For larger features, a non-negligible portion of light reflected by different stacks undergoes incoherent interaction without producing interference. The coherence length **L** defines a mutual coherence ν of light, coming from points separated by half a cycle of the grid structure, and, consequently, defines the degree of coherence γ, that is:

$$L = D \cdot \lambda$$

$$\nu = \frac{2 \cdot \pi (W_1 + W_2)}{2 \cdot L}$$

$$\gamma = \left( \frac{2 \cdot J_1(\nu)}{\nu} \right)^2$$

wherein **D** is a variable parameter determined experimentally for the actual optical system and stack structure based on the measured reflection spectra (measured data) for grids of varied cycle dimensions; $J_1$ is a known Bessel function. An approximate initial input for the determination of the parameter **D** may be given by nominal optical system characteristics. Hence, the total specular reflection **R** is given:

$$R = \gamma \cdot R_{coh} + (1 - \gamma) \cdot R_{incoh}$$

In order to estimate the possible optical effects affecting the above parts of the total reflected signal, the following main factors should be considered, being exemplified with respect to the patterned structure **10** (Figs. 1a and 1b):

1) Filling factors $a_1$ and $a_2$:

$$a_1 = \frac{W_1}{W_1 + W_2}$$

$$a_2 = \frac{W_2}{W_1 + W_2}$$

These factors represent the zero-order contribution, which is based only on the ratio of the areas of stacks **12a** and **12b**, respectively, in the reflection calculation. The zero-order signal is not sensitive to small details of the grid profile of the structure **10** such as edge rounding or local slopes. Therefore, the effects associated with diffracted light may not be considered.

2) Size coupling factors $c_1$ and $c_2$:

When the width of the stack is close to the wavelength, the filling factors $a_1$ and $a_2$ should be corrected for reducing the coupling of the incident radiation to the respective stack. To this end, so-called "coupling factors" $c_1$ and $c_2$ should be introduced to the filling factors $a_1$ and $a_2$, respectively. The coupling factor gives a negligible effect when the width of the stack is relatively large relative to the wavelength and negates the interaction completely when the stack width is much smaller than the wavelength. Using a heuristic exponential function to give this dependence, the coupling factors are as follows:

$$c_1 = \exp\left\{ -A \cdot \exp\frac{\lambda}{W_1} \right\}$$

$$c_2 = \exp\left\{ -A \cdot \exp\frac{\lambda}{W_2} \right\}$$

wherein $\lambda$ is the wavelength of a respective light component; $A$ is a variable factor depending on the dimensions and materials of the structure and is determined experimentally for the actual stack structure, as will be described further below.

3) Dissipation $b_2$ in cavity-like structures:

It is often the case that one of the stacks is essentially dissipative owing to geometrical effects reducing reflection, which effects typically take place in cavity-like structures. Among these geometrical effects are high aspect-ratio trenches and wave-guiding underneath metal grid-like structures. High aspect-ratio structures are characterized by a dissipative effect that decreases the amount of light reflected back out with phase impact. For example, multiple reflections in deep grooves in metal both reduces the amount of light reflected back out and destroys the phase relation. The above effects are relatively strong for deep geometry and relatively weak for shallow structures (relative to the wavelength). Using a heuristic exponential function to give this dependence, a dissipation factor $b_2$ is given:

$$b_2 = \exp\left\{ -B \cdot \frac{d_2}{\lambda} \right\}$$

wherein $B$ is a variable size parameter, which is determined experimentally for the actual stack structure; $d_2$ is the depth of the cavity-like part of the stack. Here, by way of example only, the stack 12b is defined as a dissipative one.

In order to model the corrected filling factors, it is assumed that light radiation not reflected from a certain cell's stack from coupling considerations is essentially reflected by other cell's stack(s). The dissipation factor $b_2$ is taken into account in the reduced effective filling factor of the geometrically dissipative area. Hence, the corrected filling factors are as found:

$$A_1 = a_1 \cdot c_1 + a_2 \cdot (1-c_2)$$

$$A_2 = (a_2 \cdot c_2 + a_1 \cdot (1-c_1)) \cdot b_2$$

4) Polarization factors, representing the contribution of polarization effects that may take place in the case of metallic grids:

When the width of a cell's stack is close to the wavelength, a corrective factor should be introduced for reducing the coupling of the incident TE radiation to the respective stack owing to boundary conditions at the edges of metal lines. The polarization factor gives a negligible effect when the width of the stack is large relative to the wavelength and negates the reflection completely when the stack width is much smaller than the wavelength. Hence, the polarization factors $p_1$ and $p_2$ are given:

$$p_1 = \exp\left\{-C\frac{\lambda}{W_1}\right\}$$

$$p_2 = \exp\left\{-C\frac{\lambda}{W_2}\right\}$$

wherein $C$ is a variable parameter determined experimentally for the actual stack structure. It is appreciated that in the absence of a pattern formed of metal lines, the optical factor $C$ is equal to zero.

Similarly, in order to model the corrected filling factors, it is assumed that light radiation not reflected from a certain cell's stack from polarization considerations is essentially reflected by other cell's stack(s). Hence, the corrected filling factors are as found:

$$A_1 = a_1 \cdot c_1 \cdot p_1 + a_2 \cdot (1-c_2 \cdot p_2)$$

$$A_2 = (a_2 \cdot c_2 \cdot p_2 + a_1 \cdot (1-c_1 \cdot p_1)) \cdot b_2$$

The intensity of a reflected signal $r(\lambda)$ from each stack is calculated using layer thickness information and material optical parameters (constituting known features). To this end, standard equations for reflection from multi-layered stacks are used, based on Fresnel coefficients for reflection and transmission at interfaces as a function of wavelength for perpendicular incidence. The thickness for each layer is either known (being provided by the user) or calculated internally by the program. The materials of the layers and, therefore, their optical parameters, such as refraction indices and absorption, are known or calculated.

In view of the above and considering that both the coherent and incoherent parts contain contributions from two polarizations (e.g. $R_{coh}=R^{(p)}+R^{(s)}$), the total reflection $R$ constituting the theoretical data obtained by the optical model, is given:

$$R = \left\{\left|r_1 \cdot A_{1P} + r_2 \cdot A_{2P}\right|^2 + \left|r_1 \cdot A_{1S} + r_2 \cdot A_{2S}\right|^2\right\} \cdot \frac{\gamma}{2}$$
$$+ \left\{\left|r_1\right|^2 \cdot A^2_{1P} + \left|r_2\right|^2 \cdot A^2_{2P} + \left|r_1\right|^2 \cdot A^2_{1S} + \left|r_2\right|^2 \cdot A^2_{2S}\right\} \cdot \frac{1-\gamma}{2}$$

wherein $r_1$ and $r_2$ are the amplitudes of reflection from first and second stacks, respectively, of the cell, that is stacks **12a** and **12b** in the present example.

Other effects known in common practice (such as lateral reflection, roughness, etc.) have been found to have a negligible contribution under the defined conditions and are accounted for by the adjustment of the parameters $A$, $B$, $C$ and $D$. Turning back to Fig. 3, there is clearly illustrated that the curves $D_m$ and $D_t$ do not coincide, that is the theoretical data does not exactly match the measured data. A suitable merit function is used for determining the goodness of fit of the obtained results. By setting the values of the optical model parameters $A$, $B$, $C$ and $D$ the optical model is defined. By fitting the values of the desired parameters, e.g. $W_1$, $W_2$, $d_1$ and $d_2$, the theoretical data is optimized until the goodness of fit reaches a certain desired value (constituting a required condition). Upon detecting that the optimized theoretical data satisfies the required condition, the desired parameters of the structure, i.e. the $W_1$, $W_2$, $d_1$ and $d_2$ are calculated from the above equations.

It should be noted that in the most general case, when the grid cycle comprises two or more locally adjacent different elements (e.g., stacks), the above optical model is still correct. The mutual coherence $\gamma'$ is as follows:

$$\nu' = \frac{\pi}{L} \sum_{i=1}^{n} W_i$$

wherein $i$ is the $i$-th element (stack) in the grid cycle; $n$ is the total number of elements within the grid cycle, and $L$ is the coherence length. For the main factors on which the above optical model is based, we have:

- Filling factor

$$a_i = \frac{W_i}{\sum_{i=1}^{n} W_i}$$

- Coupling factor

$$c_i = \exp(-A \cdot \exp\frac{\lambda}{W_i})$$

- Dissipation factor

$$b_m = \exp\{-B_m \frac{d_m}{\lambda}\}$$

wherein $m$ is the number of a dissipative element of the $n$ stacks; $d_m$ is the depth of the cavity-like part of the stack in relation to the neighboring stacks. For a non-dissipative stack, $b_n=1$, wherein $n{\neq}m$.
- Polarization factor

$$p_i = \exp\{-C \cdot \frac{\lambda}{W_i}\}$$

- Corrected filling factor

$$A_j = b_i \cdot [a_i \cdot c_i \cdot p_i + \sum_{j=1(j\neq i)}^{n} a_j(1 - c_j \cdot p_j)]$$

In view of the above, the total reflection is as follows:

$$R' = \{\left|\sum_i (r_i \cdot A_{ip})\right|^2 + \left|\sum_i (r_i \cdot A_{is})\right|^2\} \cdot \frac{\gamma}{2} + \{\sum_i (|r_i|^2 \cdot A^2_{ip}) + \sum_i (|r_i|^2 \cdot A^2_{is})\} \cdot \frac{1-\gamma}{2}$$

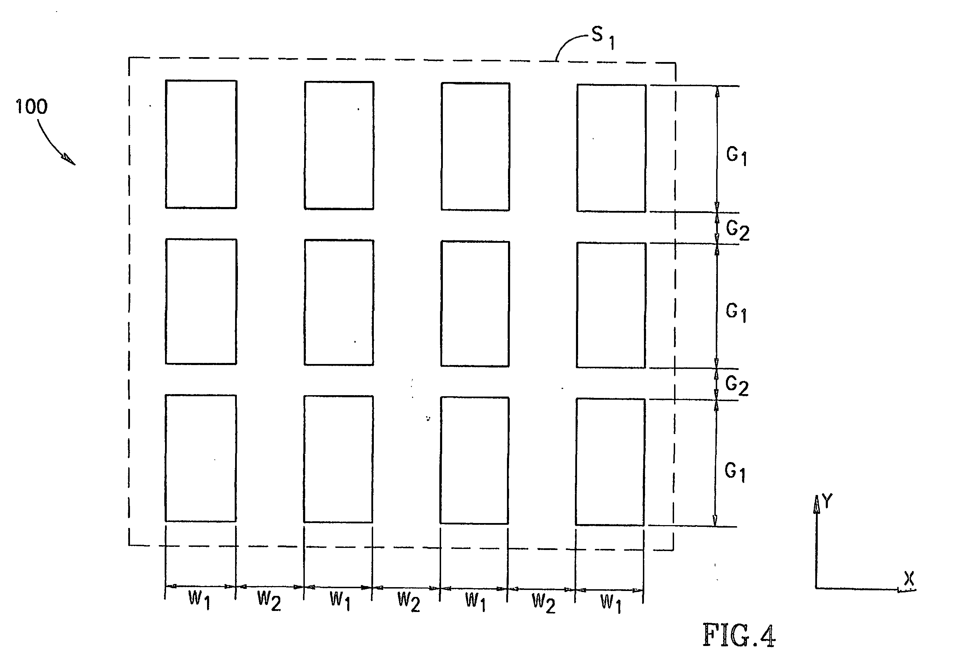

Referring to Fig. 4, there is illustrated a part of a so-called "two-dimensional" structure **100**, i.e. a structure periodical in both **X**- and **Y**-axes. This structure **100** is characterized by a plurality of grid cycles aligned along both the **X**- and **Y**-axes. The cycle aligned along the **X**-axis is formed of a pair of elements $W_1$ and $W_2$ (the stacks' widths), and the cycle aligned along the **Y**-axis is formed of a pair of elements $G_1$ and $G_2$ (the stacks' lengths). For example, the elements $G_1$ and $G_2$ may be, respectively, a metal layer stack and a block of Inter Layer Dielectric (ILD) stack. The measurement area $S_1$ defined by the diameter of the incident beam includes at least one cycle in **X**-direction and at least one cycle in **Y**-direction (several cycles in the present example).

Generally speaking, the cycle in either **X**- or **Y**-axis may be composed of several elements (e.g., stacks). If the measurement area $S_1$ is smaller than the surface area defined by the grid cycle along one of the axes **X** or **Y**, the total reflection (theoretical data) is determined in the manner described above with respect to the one-dimensional structure **10** (Figs. 1a and 1b). If the measurement area is larger than the surface area defined by the grid cycle along both **X**- and **Y**-axes, then for the total reflection $R_{2D}$ of such a 2D-structure we have:

$$R_{2\text{-}D} = \frac{G_1}{G_1 + G_2} \cdot R_{G_1} + \frac{G_2}{G_1 + G_2} \cdot R_{G_2}$$

wherein $R_{G1}$ and $R_{G2}$ are the intensities of reflection signals from the two one-dimensional structures aligned along the **Y**-axis and having the widths $G_1$ and $G_2$, respectively. It should be noted that the **Y**-axis is no more than a notation, i.e. has no physical significance, and can be exchanged with the **X**-axis. For the general case of *k* elements in the cycle aligned along the **Y**-axis, we have:

$$R_{2D} = \frac{\sum_{i=1}^{k} G_i \cdot R_{G_i}}{\sum_{i=1}^{k} G_i}$$

wherein $R_{Gi}$ and $G_i$ are the reflection intensity from and width of the *i*-th element.

In general, the axis location for calculating the reflection intensities $R_{Gi}$ is chosen so as to satisfy the following:

$$G_1 + G_2 > W_1 + W_2$$

If the above condition is not satisfied, than the two axes are exchanged accordingly.

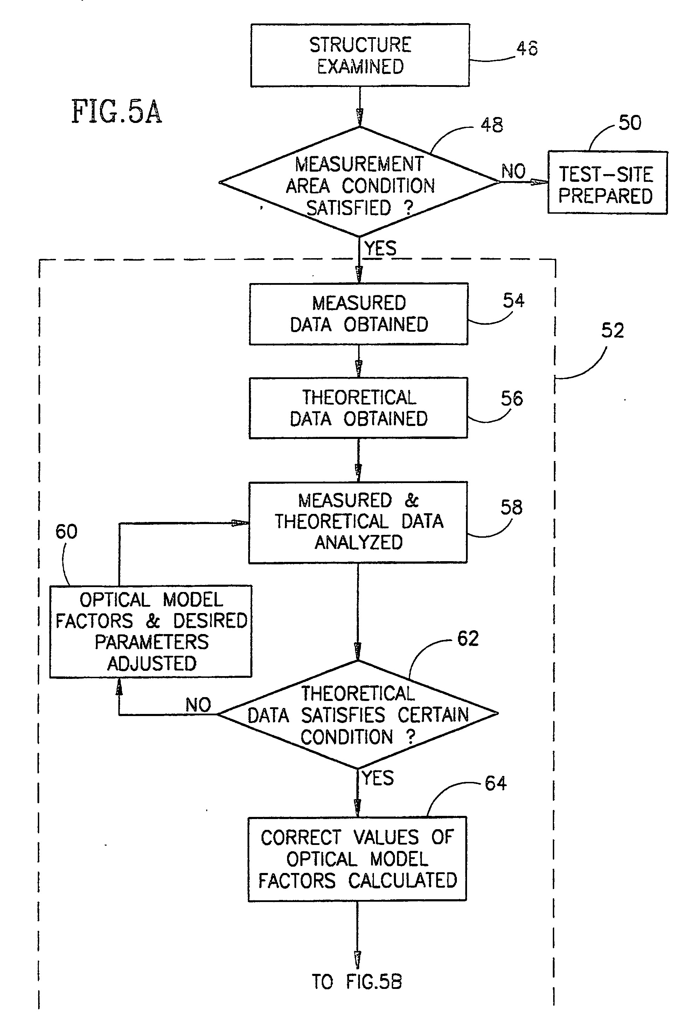

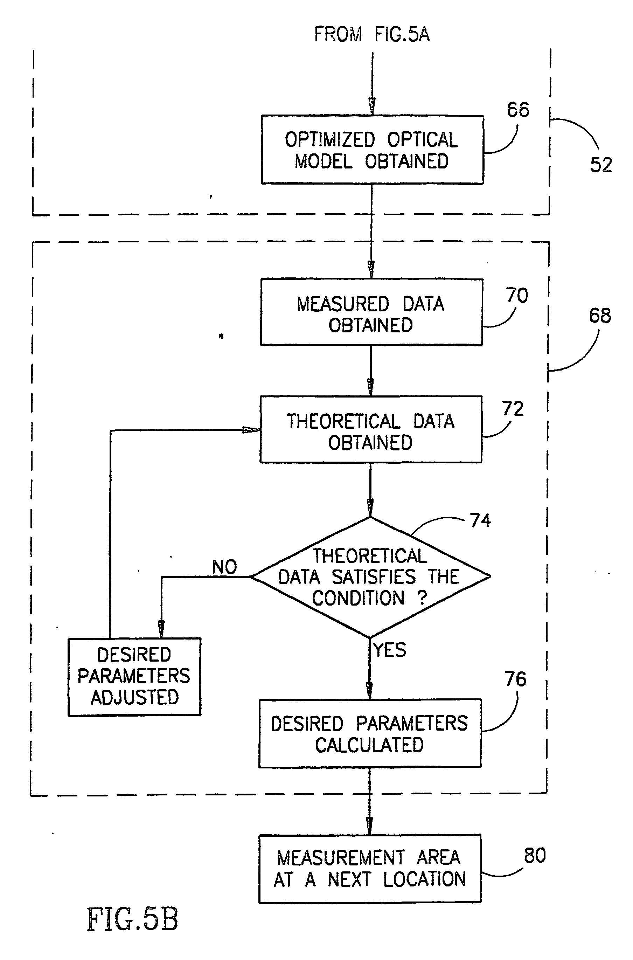

The main principles of a method according to the invention will now be described with reference to Figs. 5a and 5b. The structure of the required measurement area is examined (step 46) so as to determine whether the above measurement area condition is satisfied within the existing pattern (step 48). If this condition is not satisfied, a test-site structure satisfying the condition is designed on the reticle (step 50), the test-site being typically provided within a so-called "margin region".

Then, an initial learning mode of operation is performed, generally at step 52. The learning mode is aimed, on the one hand, at providing the measured data and, on the other hand, at optimizing the optical model. During the learning mode, the system **14** operates in the manner described above for detecting light reflected from the illuminated area substantially at zero-order and obtaining the measured data in the form of photometric intensities of each wavelength within the wavelength range of the incident radiation (step 54). Concurrently, the processor **20** applies the above optical model for obtaining the theoretical data (step 56) and compares it to the measured data (step 58). The optical model is based on some known features of the structure and nominal values of unknown features (i.e. of the desired parameters to be measured) which are provided by the user. At this stage, the relation between the theoretical data and the measured data is compared to a certain condition (step 62). If the condition is satisfied then, correct values of the parameters *A*, *B*, *C* and *D* are calculated (step 64) and an optimized optical model is obtained (step 66). If the condition is not satisfied then the optical model factors *A*, *B*, *C* and *D* and the unknown features are adjusted (step 60) until the condition is satisfied. It should be noted, although not specifically illustrated, that at this initial learning stage, the desired parameters can be calculated.

Thereafter the measurement mode of operation is performed, generally at step 68. To this end, the measured and theoretical data are concurrently produced (steps 70 and 72, respectively). It is appreciated that the theoretical data now produced is based on the known parameters of the structure, previously calculated correct values of the optical factors *A*, *B*, *C* and *D* and on the nominal values of the desired parameters to be measured. Similarly, the optimized theoretical data is compared to the measured data so as to determine whether or not the theoretical data satisfies a required condition (step 74), e.g. the goodness of fit is of a desired value. If so, the desired parameters are calculated (step 76) and if not, the desired parameters are adjusted (step 78) until the theoretical data substantially matches the measured data. If desired, the measurement mode (step 68) is then repeated for inspecting a further location on the structure **10** (step 80).

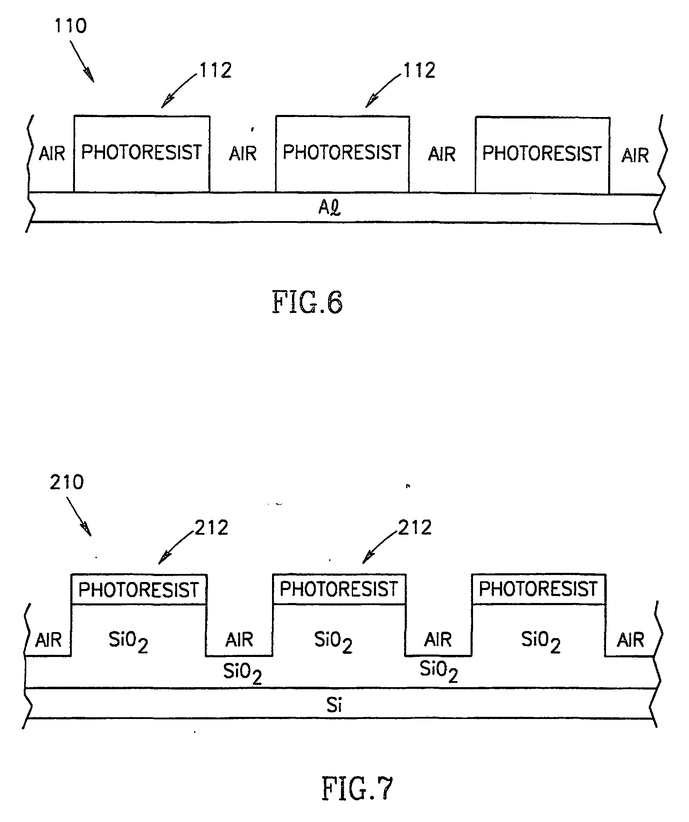

Referring to Figs. 6 and 7, there are illustrated in a self-explanatory manner two examples of patterned structures, designated **110** and **210**, respectively, which can be inspected in the above described manner by the system **14**. Each of the structures **110** and **210** consists of cells 112 and 212, respectively, each cell including two stacks formed of different layers. The parameters to be measured in these structures are, respectively, the width of a photoresist layer on top of the aluminum and the depth of the etched area (Air) within the silicon oxide layer.

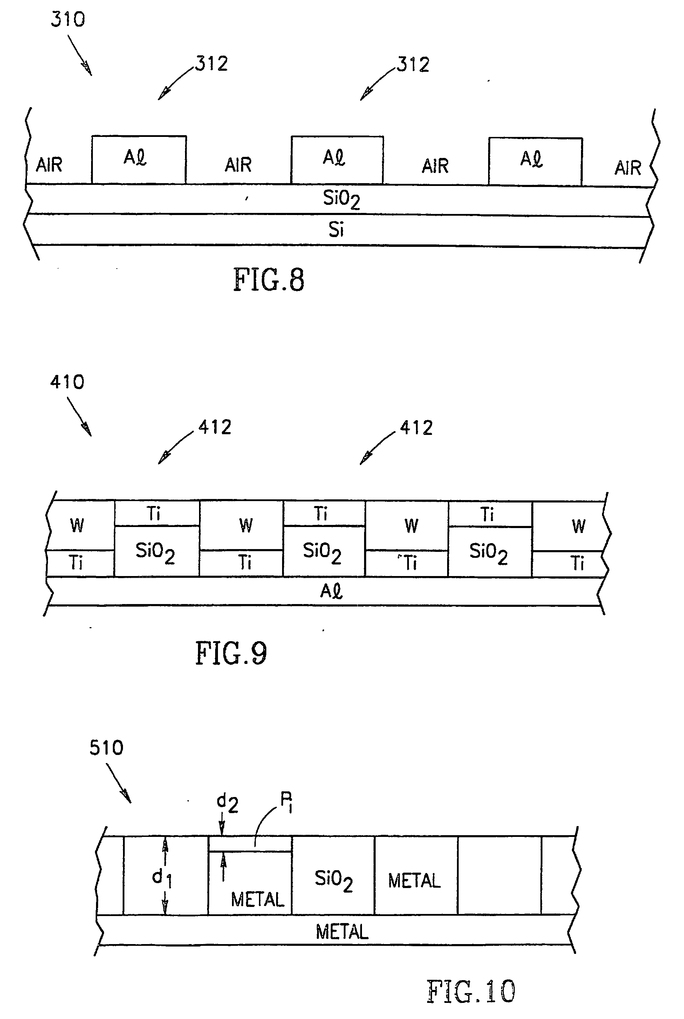

Referring to Figs. 8 and 9, there are illustrated two more example of patterned structures, designated **310** and **410**, respectively, whose parameters can be measured in accordance with the invention. Here, the parameters to be measured are, respectively, the width and thickness of an aluminum layer on top of the silicon oxide and the remaining thickness of the metallic layer on the silicon oxide layer undergoing chemical mechanical polishing.

It is appreciated that polarization effects are present in the structures **310** and **410** due to the existence of patterned metal in both structures, while being weak in the structures **110** and **210**.

Fig. 10 illustrates a patterned structure **510** utilizing copper under and between any two $S_iO_2$-based layers known as Interlayer Dielectric (ILD) insulating layer. CMP process applied to such a copper-based structure **510** typically results in copper loss portions, generally at $P_i$, a so-called "dishing" effect. This effect is associated with the properties of copper (e.g., softer nature as compared to other metals) and the chemical nature of the copper-based CMP process. The parameters to be measured are the depths $d_1$ and $d_2$ of, respectively, the uppermost ILD insulating layer and the dishing-associated portion $P_i$. In certain cases, depending on the layer stacks, the metal thickness can be determined by $(d_1 - d_2)$.

Those skilled in the art will readily appreciate that many modifications and changes may be applied to the invention as hereinbefore exemplified without departing from its scope defined in and by the appended claims. For example, the patterned structure may comprise any other number of cells, each cell being formed of any other number of stacks. In the method claims that follow, characters, which are used to designate claim steps, are provided for convenience only and do not apply any particular order of performing the steps.

## Claims

1. A method of measuring at least one desired parameter of a patterned structure (10, 100, 110, 210, 310, 410, 510) which represents a grid having at least one cycle (12) formed of at least two locally adjacent elements (12a, 12b) having different optical properties in respect of an incident radiation, the structure having a plurality of features defined by a certain process of its manufacturing, the method comprising the steps of:

   a) providing an optical model, based on at least some of said features of the structure and capable of determining theoretical data ($D_t$) representative of photometric intensities of light components of different wavelengths specularly reflected from the structure and of calculating said at least one desired parameter of the structure;
   b) illuminating a measurement area ($S_1$) by an incident radiation of a preset substantially wide wavelength range, the measurement area ($S_1$) being substantially larger than a surface area of the structure defined by the grid cycle;
   c) detecting light component substantially specularly reflected from the measurement area ($S_1$) and obtaining measured data ($D_m$) representative of photometric intensities of each wavelength within said wavelength range;
   d) analyzing the measured data and the theoretical data and optimizing said optical model until said theoretical data satisfies a predetermined condition; and
   e) upon detecting that the predetermined condition is satisfied, calculating said at least one parameter of the structure.

2. The method according to Claim 1, wherein said at least some features of the structure on which the optical model is based are available prior to measurements.

3. The method according to Claim 1, wherein said at least some features of the structure on which the optical model is based comprises nominal values of said desired parameters to be measured.

4. The method according to Claim 1, wherein said at least some features of the structure on which the optical model is based comprises materials forming each of said at least two elements.

5. The method according to Claim 1, wherein the step of providing the optical model comprises the step of: estimating known optical effects, that may be produced in the structure in response to the incident radiation, and contribution of said optical effects into the detected light component.

6. The method according to Claim 1, wherein each of said at least two elements is a stack including layers having different optical properties.

7. The method according to Claim 5, wherein each of said at least two elements is a stack including layers having different optical properties, and said estimating comprises:

i. estimating a specular reflection within the grid cycle associated with the width of stacks relative to the wavelength of the incident radiation and with dissipation in the stacks having a geometry that reduces reflection due to cavity-like structures;
ii. estimating interference in transparent layers within each stack and between light beams reflected from each stack within the grid cycle.
iii. estimating polarization associated with the interaction of the incident radiation with patterned conductive layers of the grid-like structure;
iv. estimating effects associated with coherence length of illumination.

8. The method according to Claim 1, wherein said analyzing comprises the step of:

comparing the theoretical data with the measured data and providing data indicative of the relationship between the measured and theoretical data.

9. The method according to Claim 1, wherein said optimizing comprises the steps of:

adjusting certain variable factors of the optical model until the theoretical data satisfies the predetermined condition and obtaining correct values of the optical model factors.

10. The method according to Claim 9, wherein said certain variable factors of the optical model define contributions of known optical effects into the detected light component.

11. The method according to Claim 1, wherein said predetermined condition represents a merit function defining a certain value of a goodness of fit between the measured and theoretical data.

12. The method according to Claim 1, wherein said optimizing comprises the step of

adjusting said at least one desired parameter until the theoretical data satisfies the predetermined condition.

13. The method according to Claim 1, wherein the measurement area is a part of the structure to be measured.

14. The method according to Claim 1, wherein the measurement area is located on a test site representing a test pattern similar to that of the structure, the test pattern having the same design rules and layer stacks.

15. The method according to Claim 1, wherein said theoretical data is determined according to the following equation:

$$R = \left\{ \left| r_1 \cdot A_{1P} + r_2 \cdot A_{2P} \right|^2 + \left| r_1 \cdot A_{1S} + r_2 \cdot A_{2S} \right|^2 \right\} \cdot \frac{\gamma}{2}$$
$$+ \left\{ \left| r_1 \right|^2 \cdot A^2_{1P} + \left| r_2 \right|^2 \cdot A^2_{2P} + \left| r_1 \right|^2 \cdot A^2_{1S} + \left| r_2 \right|^2 \cdot A^2_{2S} \right\} \cdot \frac{1-\gamma}{2}$$

wherein $r_1$ and $r_2$ are the amplitudes of reflection signal from the two elements, respectively; $A_{1p}$, $A_{1s}$ and $A_{2p}$, $A_{2s}$ are filling factors corrected in accordance with effects of size-coupling dissipation in a cavity-like structure and s- and p-polarizations associated with the two elements, respectively; $\gamma$ is a degree of coherence.

16. The method according to Claim 1, wherein said theoretical data is determined according to the following equation:

$$R' = \left\{ \left| \sum_i (r_i \cdot A_{ip}) \right|^2 + \left| \sum_i (r_i \cdot A_{is}) \right|^2 \right\} \cdot \frac{\gamma}{2} + \left\{ \sum_i (|r_i|^2 \cdot A^2_{ip}) + \sum_i (|r_i|^2 \cdot A^2_{is}) \right\} \cdot \frac{1-\gamma}{2}$$

wherein $r_i$ is the amplitude of reflection signal from I-th element in said at least one cycle; $A_{ip}$ and $A_{is}$ are filling factors corrected in accordance with effects of dissipation in a cavity-like structure and $s$- and $p$-polarizations associated with the i-th element in said at least one cycle, respectively; $\gamma$ is a degree of coherence.

17. The method according to Claim 1, wherein said structure comprises at least one additional cycle formed of at least two different locally adjacent elements aligned along an axis perpendicular to an axis of alignment of the elements of said at least one cycle.

18. The method according to Claim 17, wherein said theoretical data is determined according to the following equation:

$$R_{2D} = \frac{\sum_{i=1}^{k} G_i \cdot R_{G_i}}{\sum_{i=1}^{k} G_i}$$

wherein $R_{Gi}$ and $G_i$ are the reflection intensity from and width of the $i$-th element; $k$ is the total number of elements.

19. The method according to Claim 1, wherein said at least one desired parameter to be measured is a width of at least one of said at least two locally adjacent elements in the grid cycle.

20. The method according to Claim 6, wherein said at least one desired parameter to be measured is a width of at least one of said at least two locally adjacent elements in the grid cycle.

21. The method according to Claim 6, wherein said at least one desired parameter to be measured is a depth of at least one layer of said at least one stack.

22. The method according to Claim 6, wherein said at least one desired parameter to be measured is a depth of a metal-loss portion resulting from a chemical mechanical polishing applied to said structure.

23. An apparatus for measuring at least one desired parameter of a patterned structure (10, 100, 110, 210, 310, 410, 510) that represents a grid having at least one grid cycle (12) formed of at least two locally adjacent elements (12a, 12b) having different optical properties in respect of an incident radiation, the structure having a plurality of features defined by a certain process of its manufacturing, the apparatus comprising:

a spectrophotometer (14) illuminating a measurement area (S₁) by an incident radiation of a preset substantially wide wavelength range and detecting a specular reflection light component of light reflected from the measurement area (S₁) for providing measured data (Dₘ) representative of photometric intensities of detected light within said wavelength range, wherein the measurement area (S₁) is substantially larger than a surface area of the structure defined by the grid cycle; and
a processor unit (20) coupled to the spectrophotometer, the processor unit comprising a pattern recognition software and a translation means so as to be responsive to said measured data and locate measurements, the processor being adapted for

applying an optical model based on at least some of said features of the structure for providing theoretical data (Dₜ) representative of photometric intensities of light specularly reflected from the structure within said wavelength range and calculating said at least one desired parameter, and
comparing said measured and theoretical data and detecting whether the theoretical data satisfies a predetermined condition.

24. The apparatus according to Claim 23, wherein said spectrophotometer comprises a spectrophotometric detector (42) and a variable aperture stop (38) located in the optical path of light reaching the detector, the diameter of the aperture stop being variable in accordance with the grid cycle of the measured structure.

25. The apparatus according to Claim 23, wherein said measurement area is located within the patterned area of said structure.

26. The apparatus according to Claim 23, wherein said measurement area is located within a test site located outside the patterned area of said structure.

27. The apparatus according to Claim 23, wherein said theoretical data is determined according to the following equation:

$$R = \left\{ \left| r_1 \cdot A_{1P} + r_2 \cdot A_{2P} \right|^2 + \left| r_1 \cdot A_{1S} + r_2 \cdot A_{2S} \right|^2 \right\} \cdot \frac{\gamma}{2}$$
$$+ \left\{ \left| r_1 \right|^2 \cdot A^2{}_{1P} + \left| r_2 \right|^2 \cdot A^2{}_{2P} + \left| r_1 \right|^2 \cdot A^2{}_{1S} + \left| r_2 \right|^2 \cdot A^2{}_{2S} \right\} \cdot \frac{1-\gamma}{2}$$

wherein $r_1$ and $r_2$ are the amplitudes of reflection signal from the two elements, respectively; $A_{1p}$, $A_{1s}$ and $A_{2p}$, $A_{2s}$ are filling factors corrected in accordance with effects of size coupling and dissipation in a cavity-like structure and $s$- and $p$-polarizations associated with the two elements, respectively; $\gamma$ is a degree of coherence.

28. The apparatus according to Claim 23, wherein said theoretical data is determined according to the following equation:

$$R' = \left\{ \left| \sum_i (r_i \cdot A_{ip}) \right|^2 + \left| \sum_i (r_i \cdot A_{is}) \right|^2 \right\} \cdot \frac{\gamma}{2} + \left\{ \sum_i (\left| r_i \right|^2 \cdot A^2{}_{ip}) + \sum_i (\left| r_i \right|^2 \cdot A^2{}_{is}) \right\} \cdot \frac{1-\gamma}{2}$$

wherein $r_i$ is the amplitude of reflection signal from I-th element in said at least one cycle; $A_{ip}$ and $A_{is}$ are filling factors corrected in accordance with effects of size coupling and dissipation in a cavity-like structure and $s$- and $p$-polarizations associated with the i-th element in said at least one cycle, respectively; $\gamma$ is a degree of coherence.

29. The apparatus according to Claim 29, wherein said theoretical data is determined according to the following equation:

$$R'_{2D} = \frac{\sum_{i=1}^{k} G_i \cdot R_{G_i}}{\sum_{i=1}^{k} G_i}$$

wherein $R_{Gi}$ and $G_i$ are the reflection intensity from and width of the $i$-th element; $k$ is the total number of elements.

30. The apparatus according to Claim 23, wherein said structure comprises at least one additional cycle formed of at least two different locally adjacent elements aligned along an axis perpendicular to an axis of alignment of the elements of said at least one cycle.

31. The apparatus according to Claim 23, wherein each of said at least two elements is a stack including layers having different optical properties.

32. The apparatus according to Claim 23, wherein said at least one desired parameter to be measured is a width ($W_1$,

$W_2$) of at least one of said at least two locally adjacent elements in the grid cycle.

33. The apparatus according to Claim 31, wherein said at least one desired parameter to be measured is a width ($W_1$, $W_2$) of at least one of said at least two locally adjacent elements in the grid cycle.

34. The apparatus according to Claim 31, wherein said at least one desired parameter to be measured is a depth ($d_1$, $d_2$) of at least one layer of said at least one stack.

35. The apparatus according to Claim 31, wherein said at least one desired parameter to be measured is a depth ($d_2$) of a metal-loss portion ($P_i$) resulting from a chemical mechanical polishing applied to said structure.


**Patentansprüche**

1. Verfahren zum Messen wenigstens eines gewünschten Parameters einer Musterstruktur (10, 100, 110, 210, 310, 410, 510), die ein Gitter darstellt, das wenigstens einen Zyklus (12) hat, der von wenigstens zwei örtlich aneinandergrenzenden Elementen (12a, 12b) gebildet wird, die unterschiedliche optische Eigenschaften in Bezug auf eine auftreffende Strahlung haben, wobei die Struktur eine Vielzahl von Merkmalen hat, die durch einen bestimmten Prozess ihrer Herstellung definiert werden, und wobei das Verfahren die folgenden Schritte umfasst:

   a) Bereitstellen eines optischen Modells, das auf wenigstens einigen der Merkmale der Struktur basiert und mit dem theoretische Daten ($D_t$) bestimmt werden können, die für fotometrische Intensitäten von Lichtkomponenten unterschiedlicher Wellenlängen stehen, die spiegelnd von der Struktur reflektiert werden, und mit dem der wenigstens eine gewünschte Parameter der Struktur berechnet werden kann;

   b) Beleuchten eines Messbereiches ($S_1$) mit einer auftreffenden Strahlung eines vorgegebenen, im Wesentlichen breiten Wellenlängenbereiches, wobei der Messbereich ($S_1$) im Wesentlichen größer ist als eine Fläche der Struktur, die durch den Gitter-Zyklus definiert wird;

   c) Erfassen von Lichtkomponenten, die im Wesentlichen spiegelnd von dem Messbereich ($S_1$) reflektiert werden, und Gewinnen gemessener Daten ($D_m$), die für fotometrische Intensitäten jeder Wellenlänge innerhalb des Wellenlängenbereiches stehen;

   d) Analysieren der gemessenen Daten und der theoretischen Daten und Optimieren des optischen Modells, bis die theoretischen Daten eine vorgegebene Bedingung erfüllen; und

   e) Berechnen des wenigstens einen Parameters der Struktur, wenn erfasst wird, dass die vorgegebene Bedingung erfüllt ist.

2. Verfahren nach Anspruch 1, wobei die wenigstens einigen Merkmale der Struktur, auf denen das optische Modell basiert, vor den Messungen verfügbar sind.

3. Verfahren nach Anspruch 1, wobei die wenigstens einigen Merkmale der Struktur, auf denen das optische Modell basiert, Nennwerte der zu messenden gewünschten Parameter umfassen.

4. Verfahren nach Anspruch 1, wobei die wenigstens einigen Merkmale der Struktur, auf denen das optische Modell basiert, Materialien umfassen, die jedes der wenigstens zwei Elemente bilden.

5. Verfahren nach Anspruch 1, wobei der Schritt des Bereitstellens des optischen Modells den folgenden Schritt umfasst:

   Schätzen bekannter optischer Effekte, die in der Struktur in Reaktion auf auftreffende Strahlung erzeugt werden können, und des Beitrags der optischen Effekte zu der erfassten Lichtkomponente.

6. Verfahren nach Anspruch 1, wobei jedes der wenigstens zwei Elemente ein Stapel ist, der Schichten mit unterschiedlichen optischen Eigenschaften enthält.

7. Verfahren nach Anspruch 5, wobei jedes der wenigstens zwei Elemente ein Stapel ist, der Schichten mit unterschiedlichen optischen Eigenschaften enthält, und das Schätzen umfasst:

I) Schätzen einer Spiegelreflektion innerhalb des Gitterzyklus, die mit der Breite von Stapeln relativ zu der Wellenlänge der auftreffenden Strahlung und mit der Dissipation in den Stapeln mit einer Form zusammenhängt, die Reflektion aufgrund hohlraumartiger Strukturen verringert;

II) Schätzen von Interferenz in transparenten Schichten innerhalb jedes Stapels und zwischen Lichtstrahlen, die von jedem Stapel innerhalb des Gitter-Zyklus reflektiert werden.

III) Schätzen von Polarisation, die mit der Wechselwirkung der auftreffenden Strahlung mit gemusterten leitenden Schichten der gitterartigen Struktur zusammenhängt;

IV) Schätzen von Effekten, die mit der Kohärenzlänge der Beleuchtung zusammenhängen.

**8.** Verfahren nach Anspruch 1, wobei das Analysieren den folgenden Schritt umfasst:

Vergleichen der theoretischen Daten mit den gemessenen Daten und Bereitstellen von Daten, die die Beziehung zwischen den gemessenen und den theoretischen Daten anzeigen.

**9.** Verfahren nach Anspruch 1, wobei das Optimieren die folgenden Schritte umfasst:

Regulieren bestimmter variabler Faktoren des optischen Modells, bis die theoretischen Daten die vorgegebene Bedingung erfüllen, und Gewinnen korrekter Werte der Faktoren des optischen Modells.

**10.** Verfahren nach Anspruch 9, wobei die bestimmten variablen Faktoren des optischen Modells Beiträge bekannter optischer Effekte zu der erfassten Lichtkomponente definieren.

**11.** Verfahren nach Anspruch 1, wobei die vorgegebene Bedingung eine Gütefunktion darstellt, die einen bestimmten Wert einer Güte der Anpassung zwischen den gemessenen und den theoretischen Daten definiert.

**12.** Verfahren nach Anspruch 1, wobei das Optimieren den folgenden Schritt umfasst:

Regulieren des wenigstens einen gewünschten Parameters, bis die theoretischen Daten die vorgegebene Bedingung erfüllen.

**13.** Verfahren nach Anspruch 1, wobei der Messbereich ein Teil der zu messenden Struktur ist.

**14.** Verfahren nach Anspruch 1, wobei der Messbereich sich auf einer Teststelle befindet, die ein Testmuster darstellt, das dem der Struktur gleicht, wobei das Testmuster die gleichen Entwurfsregeln und Schichtstapel hat.

**15.** Verfahren nach Anspruch 1, wobei die theoretischen Daten entsprechend der folgenden Gleichung bestimmt werden:

$$R = \left\{ \left| r_1 \cdot A_{1P} + r_2 \cdot A_{2P} \right|^2 + \left| r_1 \cdot A_{1S} + r_2 \cdot A_{2S} \right|^2 \right\} \cdot \frac{\gamma}{2}$$
$$+ \left\{ \left| r_1 \right|^2 \cdot A^2{}_{1P} + \left| r_2 \right|^2 \cdot A^2{}_{2P} + \left| r_1 \right|^2 \cdot A^2{}_{1S} + \left| r_2 \right|^2 \cdot A^2{}_{2S} \right\} \cdot \frac{1-\gamma}{2}$$

wobei $r_1$ und $r_2$ jeweils die Amplituden von Reflektionssignalen von den zwei Elementen sind; $A_{1p}$, $A_{1s}$ und $A_{2p}$, $A_{2s}$ Füllfaktoren sind, die entsprechend Effekten der Größenabhängigkeit und der Dissipation in einer hohlraumartigen Struktur und $s$- bzw. $p$-Polarisationen korrigiert werden, die mit den zwei Elementen verbunden sind; $\gamma$ ein Grad der Kohärenz ist.

**16.** Verfahren nach Anspruch 1, wobei die theoretischen Daten entsprechend der folgenden Gleichung bestimmt werden:

$$R' = \left\{ \left| \sum_i (r_i \cdot A_{ip}) \right|^2 + \left| \sum_i (r_i \cdot A_{is}) \right|^2 \right\} \cdot \frac{z}{2} + \left\{ \sum_i (|r_i|^2 \cdot A^2_{ip}) + \sum_i (|r_i|^2 \cdot A^2_{is}) \right\} \cdot \frac{1-\gamma}{2}$$

wobei $r_i$ die Amplitude des Reflektionssignals von dem I-ten Element in dem wenigstens einen Zyklus ist; $A_{ip}$ und $A_{is}$ Füllfaktoren sind, die entsprechend Effekten der Dissipation in einer hohlraumartigen Struktur und s- bzw. *p*-Polarisationen korrigiert werden, die mit dem i-ten Element in dem wenigstens einen Zyklus verbunden sind; $\gamma$ ein Grad der Kohärenz ist.

17. Verfahren nach Anspruch 1, wobei die Struktur wenigstens einen zusätzlichen Zyklus umfasst, der von wenigstens zwei verschiedenen örtlich aneinandergrenzenden Elementen gebildet wird, die entlang einer Achse senkrecht zu einer Ausrichtachse der Elemente des wenigstens einen Zyklus ausgerichtet sind.

18. Verfahren nach Anspruch 17, wobei die theoretischen Daten entsprechend der folgenden Gleichung bestimmt werden:

$$R_{2D} = \frac{\sum_{i=1}^{k} G_i \cdot R_{G_i}}{\sum_{i=1}^{k} G_i}$$

wobei $R_{G_i}$ und $G_i$ die Reflektionsintensität von dem i-ten Element bzw. dessen Breite sind; k die Gesamtzahl von Elementen ist.

19. Verfahren nach Anspruch 1, wobei der wenigstens eine zu messende gewünschte Parameter eine Breite wenigstens eines der wenigstens zwei örtlich aneinandergrenzenden Elemente in dem Gitter-Zyklus ist.

20. Verfahren nach Anspruch 6, wobei der wenigstens eine zu messende gewünschte Parameter eine Breite wenigstens eines der wenigstens zwei örtlich aneinandergrenzenden Elemente in dem Gitter-Zyklus ist.

21. Verfahren nach Anspruch 6, wobei der wenigstens eine zu messende gewünschte Parameter eine Tiefe wenigstens einer Schicht des wenigstens einen Stapels ist.

22. Verfahren nach Anspruch 6, wobei der wenigstens eine zu messende gewünschte Parameter eine Tiefe eines Metallverlusts-Abschnitts ist, der durch ein chemisch-mechanisches Polieren entsteht, dem die Struktur unterzogen wird.

23. Vorrichtung zum Messen wenigstens eines gewünschten Parameters einer Musterstruktur (10, 100, 110, 210, 310, 410, 510), die ein Gitter darstellt, das wenigstens einen Gitter-Zyklus (12) hat, der von wenigstens zwei örtlich aneinandergrenzenden Elementen (12a, 12b) gebildet wird, die unterschiedliche optische Eigenschaften in Bezug auf eine auftreffende Strahlung haben, wobei die Struktur eine Vielzahl von Merkmalen hat, die durch einen bestimmten Prozess ihrer Herstellung definiert werden, und wobei die Vorrichtung umfasst:

ein Spektrofotometer (14), das einen Messbereich ($S_1$) mit einer auftreffenden Strahlung eines vorgegebenen, im Wesentlichen breiten Wellenlängenbereiches beleuchtet und eine Spiegelreflektions-Lichtkomponente von Licht erfasst, das von dem Messbereich ($S_1$) reflektiert wird, um gemessene Daten ($D_m$) bereitzustellen, die für fotometrische Intensitäten von erfasstem Licht innerhalb des Wellenlängenbereiches stehen, wobei der Messbereich ($S_1$) im Wesentlichen größer ist als eine Fläche der Struktur, die durch den Gitter-Zyklus definiert wird; und

eine Verarbeitungseinheit (20), die mit dem Spektrofotometer verbunden ist, wobei die Verarbeitungseinheit eine Mustererkennungs-Software und eine Umsetzungseinrichtung umfasst, so dass sie auf die gemessenen Daten anspricht und Messungen lokalisiert, wobei die Verarbeitungseinrichtung so eingerichtet ist, dass sie:

ein optisches Modell, das auf wenigstens einigen der Merkmale der Struktur basiert, anwendet, um theoretische Daten ($D_t$) bereitzustellen, die für fotometrische Intensitäten von Licht stehen, das innerhalb des Wellenlängenbereiches spiegelnd von der Struktur reflektiert wird, und um den wenigstens einen gewünschten Parameter zu berechnen, und

die gemessenen und die theoretischen Daten vergleicht und erfasst, ob die theoretischen Daten eine vorgegebene Bedingung erfüllen.

24. Vorrichtung nach Anspruch 23, wobei das Spektrofotometer einen spektrofotometrischen Detektor (42) und eine Blende mit variabler Öffnung (38) umfasst, die sich auf dem Lichtweg von Licht befindet, das zu dem Detektor gelangt, wobei der Durchmesser der Öffnungsblende entsprechend dem Gitter-Zyklus der gemessenen Struktur verändert werden kann.

25. Vorrichtung nach Anspruch 23, wobei sich der Messbereich innerhalb des gemusterten Bereichs der Struktur befindet.

26. Vorrichtung nach Anspruch 23, wobei sich der Messbereich innerhalb einer Teststelle befindet, die sich außerhalb des gemusterten Bereichs der Struktur befindet.

27. Vorrichtung nach Anspruch 23, wobei die theoretischen Daten entsprechend der folgenden Gleichung bestimmt werden:

$$R = \left\{ \left| r_1 \cdot A_{1P} + r_2 \cdot A_{2P} \right|^2 + \left| r_1 \cdot A_{1S} + r_2 \cdot A_{2S} \right|^2 \right\} \cdot \frac{\gamma}{2}$$
$$+ \left\{ \left| r_1 \right|^2 \cdot A^2_{1P} + \left| r_2 \right|^2 \cdot A^2_{2P} + \left| r_1 \right|^2 \cdot A^2_{1S} + \left| r_2 \right|^2 \cdot A^2_{2S} \right\} \cdot \frac{1-\gamma}{2}$$

wobei $r_1$ und $r_2$ jeweils die Amplituden des Reflektionssignals von den zwei Elementen sind; $A_{1p}$, $A_{1s}$ und $A_{2p}$, $A_{2s}$ Füllfaktoren sind, die entsprechend Effekten der Größenabhängigkeit und der Dissipation in einer hohlraumartigen Struktur sowie $s$-bzw. $p$-Polarisationen korrigiert werden, die jeweils mit den zwei Elementen verbunden sind; $\gamma$ ein Grad der Kohärenz ist.

28. Vorrichtung nach Anspruch 23, wobei die theoretischen Daten entsprechend der folgenden Gleichung bestimmt werden:

$$R' = \left\{ \left| \sum_i (r_i \cdot A_{ip}) \right|^2 + \left| \sum_i (r_i \cdot A_{is}) \right|^2 \right\} \cdot \frac{\gamma}{2} + \left\{ \sum_i \left( \left| r_i \right|^2 \cdot A^2_{ip} \right) + \sum_i \left( \left| r_i \right|^2 \cdot A^2_{is} \right) \right\} \cdot \frac{1-\gamma}{2}$$

wobei $r_i$ die Amplitude des Reflektionssignals von dem I-ten Element in dem wenigstens einen Zyklus ist; $A_{ip}$ und $A_{is}$ Füllfaktoren sind, die entsprechend Effekten der Größenabhängigkeit und der Dissipation in einer hohlraumartigen Struktur sowie $s$-bzw. $p$-Polarisationen korrigiert werden, die mit dem i-ten Element in dem wenigstens einen Zyklus jeweils verbunden sind, $\gamma$ ein Grad der Kohärenz ist.

29. Vorrichtung nach Anspruch 29, wobei die theoretischen Daten entsprechend der folgenden Gleichung bestimmt werden:

EP 1 037 012 B1

$$R_{2D} = \frac{\sum_{i=1}^{k} G_i \cdot R_{G_i}}{\sum_{i=1}^{k} G_i}$$

wobei $R_{Gi}$ und $G_i$ die Reflektionsintensität von dem i-ten Element bzw. dessen Breite sind; k die Gesamtzahl von Elementen ist.

**30.** Vorrichtung nach Anspruch 23, wobei die Struktur wenigstens einen zusätzlichen Zyklus umfasst, der von wenigstens zwei verschiedenen örtlich aneinandergrenzenden Elementen gebildet wird, die entlang einer Achse senkrecht zu einer Ausrichtachse der Elemente des wenigstens einen Zyklus ausgerichtet sind.

**31.** Vorrichtung nach Anspruch 23, wobei jedes der wenigstens zwei Elemente ein Stapel ist, der Schichten mit unterschiedlichen optischen Eigenschaften enthält.

**32.** Vorrichtung nach Anspruch 23, wobei der wenigstens eine zu messende gewünschte Parameter eine Breite ($W_1$, $W_2$) wenigstens eines der wenigstens zwei örtlich aneinandergrenzenden Elemente in dem Gitter-Zyklus ist.

**33.** Vorrichtung nach Anspruch 31, wobei der wenigstens eine zu messende gewünschte Parameter eine Breite ($W_1$, $W_2$) wenigstens eines der wenigstens zwei örtlich aneinandergrenzenden Elemente in dem Gitter-Zyklus ist.

**34.** Vorrichtung nach Anspruch 31, wobei der wenigstens eine zu messende gewünschte Parameter eine Tiefe ($d_1$, $d_2$) wenigstens einer Schicht des wenigstens einen Stapels ist.

**35.** Vorrichtung nach Anspruch 31, wobei der wenigstens eine zu messende gewünschte Parameter eine Tiefe ($d_2$) eines Metallverlust-Abschnitts ($P_i$) ist, der durch ein chemisch-mechanisches Polieren entsteht, dem die Struktur unterzogen wird.

**Revendications**

**1.** Procédé pour mesurer au moins un paramètre souhaité d'une structure à motifs (10, 100, 110, 210, 310, 410, 510) qui représente une grille ayant au moins un cycle (12) formé d'au moins deux éléments localement adjacents (12a, 12b) ayant des propriétés optiques différentes par rapport à un rayonnement incident, la structure ayant une pluralité de caractéristiques définies par un certain processus de sa fabrication, le procédé comprenant les étapes de :

a) fourniture d'un modèle optique, basé sur au moins certaines desdites caractéristiques de la structure et capable de déterminer des données théoriques ($D_t$) représentatives des intensités photométriques de composantes de lumière de différentes longueurs d'onde réfléchies de manière spéculaire à partir de la structure et de calculer ledit au moins un paramètre souhaité de la structure ;
b) illumination d'une zone de mesure ($S_1$) par un rayonnement incident d'une gamme de longueurs d'onde sensiblement large préétablie, la zone de mesure ($S_1$) étant sensiblement plus grande qu'une zone de surface de la structure définie par le cycle de grille ;
c) détection d'une composante de lumière réfléchie de manière sensiblement spéculaire à partir de la zone de mesure ($S_1$) et obtention des données mesurées ($D_m$) représentatives des intensités photométriques de chaque longueur d'onde à l'intérieur de ladite gamme de longueurs d'onde ;
d) analyse des données mesurées et des données théoriques et optimisation dudit modèle optique jusqu'à ce que lesdites données théoriques satisfassent à une condition prédéterminée ; et
e) après avoir détecté que la condition prédéterminée est satisfaite, calcul dudit au moins un paramètre de la structure.

**2.** Procédé selon la revendication 1, dans lequel lesdites au moins certaines caractéristiques de la structure, sur lesquelles est basé le modèle optique, sont disponibles avant les mesures.

**3.** Procédé selon la revendication 1, dans lequel lesdites au moins certaines caractéristiques de la structure, sur lesquelles est basé le modèle optique, comprennent des valeurs nominales desdits paramètres souhaités destinés à être mesurés.

**4.** Procédé selon la revendication 1, dans lequel lesdites au moins certaines caractéristiques de la structure, sur lesquelles est basé le modèle optique, comprennent des matières formant chacun desdits au moins deux éléments.

**5.** Procédé selon la revendication 1, dans lequel l'étape consistant à fournir le modèle optique comprend l'étape :

d'estimation des effets optiques connus, qui peuvent être produits dans la structure en réponse au rayonnement incident, et la contribution desdits effets optiques dans la composante de lumière détectée.

**6.** Procédé selon la revendication 1, dans lequel chacun desdits au moins deux éléments est une pile comprenant des couches ayant différentes propriétés optiques.

**7.** Procédé selon la revendication 5, dans lequel chacun desdits au moins deux éléments est une pile comprenant des couches ayant différentes propriétés optiques, et ladite estimation comprend :

i. l'estimation d'une réflexion spéculaire à l'intérieur du cycle de grille associée à la largeur des piles par rapport à la longueur d'onde du rayonnement incident et à la dissipation dans les piles ayant une géométrie qui réduit la réflexion due à des structures analogues à des cavités ;
ii. l'estimation d'une interférence dans les couches transparentes à l'intérieur de chaque pile et entre les faisceaux optiques réfléchis à partir de chaque pile à l'intérieur du cycle de grille ;
iii. l'estimation d'une polarisation associée à l'interaction du rayonnement incident avec les couches conductrices à motifs de la structure analogue à une grille ;
iv. l'estimation d'effets associés à une longueur de cohérence d'illumination.

**8.** Procédé selon la revendication 1, dans lequel ladite analyse comprend l'étape de :

comparaison des données théoriques avec les données mesurées et fourniture des données représentatives de la relation entre les données mesurées et théoriques.

**9.** Procédé selon la revendication 1, dans lequel ladite optimisation comprend les étapes :

d'ajustement de certains facteurs variables du modèle optique jusqu'à ce que les données théoriques satisfassent la condition prédéterminée et d'obtention des valeurs correctes des facteurs du modèle optique.

**10.** Procédé selon la revendication 9, dans lequel lesdits certains facteurs variables du modèle optique définissent des contributions d'effets optiques connus dans la composante de lumière détectée.

**11.** Procédé selon la revendication 1, dans lequel ladite condition prédéterminée représente une fonction de mérite définissant une certaine valeur d'une qualité d'ajustement entre les données mesurées et théoriques.

**12.** Procédé selon la revendication 1, dans lequel ladite optimisation comprend l'étape :

d'ajustement dudit au moins un paramètre souhaité jusqu'à ce que les données théoriques satisfassent la condition prédéterminée.

**13.** Procédé selon la revendication 1, dans lequel la zone de mesure est une partie de la structure destinée à être mesurée.

**14.** Procédé selon la revendication 1, dans lequel la zone de mesure est située sur un emplacement d'essai représentant un motif d'essai similaire à celui de la structure, le motif d'essai ayant les mêmes règles de conception et les mêmes piles de couches.

**15.** Procédé selon la revendication 1, dans lequel lesdites données théoriques sont déterminées selon l'équation suivante :

$$R = \left\{ \left| r_1 \cdot A_{1P} + r_2 \cdot A_{2P} \right|^2 + \left| r_1 \cdot A_{1S} + r_2 \cdot A_{2S} \right|^2 \right\} \cdot \frac{\gamma}{2}$$
$$+ \left\{ \left| r_1 \right|^2 \cdot A^2_{1P} + \left| r_2 \right|^2 \cdot A^2_{2P} + \left| r_1 \right|^2 \cdot A^2_{1S} + \left| r_2 \right|^2 \cdot A^2_{2S} \right\} \cdot \frac{1-\gamma}{2}$$

dans laquelle $r_1$ et $r_2$ are les amplitudes du signal de réflexion provenant respectivement des deux éléments ; $A_{1p}$, $A_{1s}$ et $A_{2p}$, $A_{2s}$ sont des facteurs de remplissage corrigés conformément aux effets de dissipation par couplage de taille dans une structure analogue à une cavité et aux polarisations s et p associées respectivement aux deux éléments ; $\gamma$ est un degré de cohérence.

**16.** Procédé selon la revendication 1, dans lequel lesdites données théoriques sont déterminées selon l'équation suivante :

$$R' = \left\{ \left| \sum_i (r_i \cdot A_{ip}) \right|^2 + \left| \sum_i (r_i \cdot A_{is}) \right|^2 \right\} \cdot \frac{\gamma}{2} + \left\{ \sum_i (\left| r_i \right|^2 \cdot A^2_{ip}) + \sum_i (\left| r_i \right|^2 \cdot A^2_{is}) \right\} \cdot \frac{1-\gamma}{2}$$

dans laquelle ri est l'amplitude du signal de réflexion à partir du I[ème] élément dans ledit au moins un cycle ; $A_{ip}$ et $A_{is}$ sont des facteurs de remplissage corrigés conformément aux effets de dissipation dans une structure analogue à une cavité et aux polarisations $s$ et $p$ associées respectivement au i[ème] élément dans ledit au moins un cycle; $\gamma$ est un degré de cohérence.

**17.** Procédé selon la revendication 1, dans lequel ladite structure comprend au moins un cycle supplémentaire formé d'au moins deux éléments différents localement adjacents, alignés le long d'un axe perpendiculaire à un axe d'alignement des éléments dudit au moins un cycle.

**18.** Procédé selon la revendication 17, dans lequel lesdites données théoriques sont déterminées selon l'équation suivante :

$$R_{2D} = \frac{\sum_{i=1}^{k} G_i \cdot R_{G_i}}{\sum_{i=1}^{k} G_i}$$

dans laquelle $R_{Gi}$ et $G_i$ représentent l'intensité de réflexion du i[ème] élément et sa largeur ; $k$ est le nombre total d'éléments.

**19.** Procédé selon la revendication 1, dans lequel ledit au moins un paramètre souhaité devant être mesuré est une largeur d'au moins un desdits au moins deux éléments localement adjacents dans le cycle de grille.

**20.** Procédé selon la revendication 6, dans lequel ledit au moins un paramètre souhaité devant être mesuré est une largeur d'au moins un desdits au moins deux éléments localement adjacents dans le cycle de grille.

**21.** Procédé selon la revendication 6, dans lequel ledit au moins un paramètre souhaité devant être mesuré est une profondeur d'au moins une couche de ladite au moins une pile.

**22.** Procédé selon la revendication 6, dans lequel ledit au moins un paramètre souhaité devant être mesuré est une profondeur d'une partie de perte de métal résultant d'un polissage mécanico-chimique appliqué à ladite structure.

**23.** Appareil pour mesurer au moins un paramètre souhaité d'une structure à motifs (10, 100, 110, 210, 310, 410, 510) qui représente une grille ayant au moins un cycle de grille (12) formé d'au moins deux éléments localement adjacents (12a, 12b) ayant des propriétés optiques différentes par rapport à un rayonnement incident, la structure ayant une pluralité de caractéristiques définies par un certain processus de sa fabrication, l'appareil comprenant :

- un spectrophotomètre (14) illuminant une zone de mesure ($S_1$) à l'aide d'un rayonnement incident d'une gamme de longueurs d'onde sensiblement large préétablie et détectant une composante de lumière à réflexion spéculaire de lumière réfléchie à partir de la zone de mesure ($S_1$) pour fournir des données mesurées ($D_m$) représentatives des intensités photométriques de la lumière détectée à l'intérieur de ladite gamme de longueurs d'onde, dans lequel la zone de mesure ($S_1$) est sensiblement plus grande qu'une zone de surface spécifique de la structure définie par le cycle de grille ; et
- une unité de processeur (20) couplée au spectrophotomètre, l'unité de processeur comprenant un logiciel de reconnaissance de motifs et un moyen de translation de façon à être sensible auxdites données mesurées et à situer les mesures, le processeur étant adapté pour

   appliquer un modèle optique basé sur au moins certaines desdites caractéristiques de la structure pour fournir des données théoriques ($D_t$) représentatives des intensités photométriques de la lumière réfléchie de manière spéculaire à partir de la structure à l'intérieur de ladite gamme de longueurs d'onde et calculer ledit au moins un paramètre souhaité, et

   comparer lesdites données mesurées et théoriques et détecter si les données théoriques satisfont à une condition prédéterminée.

**24.** Appareil selon la revendication 23, dans lequel ledit spectrophotomètre comprend un détecteur spectrophotométrique (42) et un diaphragme d'ouverture variable (38) situé dans le chemin optique de la lumière atteignant le détecteur, le diamètre du diaphragme d'ouverture étant variable en fonction du cycle de grille de la structure mesurée.

**25.** Appareil selon la revendication 23, dans lequel ladite zone de mesure est située à l'intérieur de la zone à motifs de ladite structure.

**26.** Appareil selon la revendication 23, dans lequel ladite zone de mesure est située à l'intérieur d'un site d'essai situé à l'extérieur de la zone à motifs de ladite structure.

**27.** Appareil selon la revendication 23, dans lequel lesdites données théoriques sont déterminées selon l'équation suivante :

$$R = \left\{ \left| r_1 \cdot A_{1P} + r_2 \cdot A_{2P} \right|^2 + \left| r_1 \cdot A_{1S} + r_2 \cdot A_{2S} \right|^2 \right\} \cdot \frac{\gamma}{2}$$
$$+ \left\{ \left| r_1 \right|^2 \cdot A^2_{1P} + \left| r_2 \right|^2 \cdot A^2_{2P} + \left| r_1 \right|^2 \cdot A^2_{1S} + \left| r_2 \right|^2 \cdot A^2_{2S} \right\} \cdot \frac{1-\gamma}{2}$$

dans laquelle $r_1$ et $r_2$ sont les amplitudes du signal de réflexion provenant respectivement des deux éléments ; $A_{1p}$, $A_{1s}$, et $A_{2p}$, $A_{2s}$ sont des facteurs de remplissage corrigés conformément aux effets de couplage de taille et de dissipation dans une structure analogue à une cavité et aux polarisations *s* et *p* associées respectivement aux deux éléments ; $\gamma$ est un degré de cohérence.

**28.** Appareil selon la revendication 23, dans lequel lesdites données théoriques sont déterminées selon l'équation suivante :

$$R' = \left\{ \left| \sum_i (r_i \cdot A_{ip}) \right|^2 + \left| \sum_i (r_i \cdot A_{is}) \right|^2 \right\} \cdot \frac{\gamma}{2} + \left\{ \sum_i (\left| r_i \right|^2 \cdot A^2_{ip}) + \sum_i (\left| r_i \right|^2 \cdot A^2_{is}) \right\} \cdot \frac{1-\gamma}{2}$$

dans laquelle $r_i$ est l'amplitude du signal de réflexion à partir du I$^{\text{ème}}$ élément dans ledit au moins un cycle ; $A_{ip}$ et $A_{is}$ sont des facteurs de remplissage corrigés conformément aux effets de couplage de taille et de dissipation dans une structure analogue à une cavité et aux polarisations $s$ et $p$ associées respectivement au i$^{\text{ème}}$ élément dans ledit au moins un cycle ; $\gamma$ est un degré de cohérence.

**29.** Appareil selon la revendication 29, dans lequel lesdites données théoriques sont déterminées selon l'équation suivante :

$$R_{2D} = \frac{\sum\limits_{i=1}^{k} G_i \cdot R_{G_i}}{\sum\limits_{i=1}^{k} G_i}$$

dans laquelle $R_{Gi}$ et $G_i$ représentent l'intensité de réflexion du i$^{\text{ème}}$ élément et sa largeur ; $k$ est le nombre total d'éléments.

**30.** Appareil selon la revendication 23, dans lequel ladite structure comprend au moins un cycle supplémentaire formé d'au moins deux éléments différents localement adjacents alignés le long d'un axe perpendiculaire à un axe d'alignement des éléments dudit au moins un cycle.

**31.** Appareil selon la revendication 23, dans lequel chacun desdits au moins deux éléments est une pile comprenant des couches ayant différentes propriétés optiques.

**32.** Appareil selon la revendication 23, dans lequel ledit au moins un paramètre souhaité devant être mesuré est une largeur ($W_1$, $W_2$) d'au moins un desdits au moins deux éléments localement adjacents dans le cycle de grille.

**33.** Appareil selon la revendication 31, dans lequel ledit au moins un paramètre souhaité devant être mesuré est une largeur ($W_1$, $W_2$) d'au moins un desdits au moins deux éléments localement adjacents dans le cycle de grille.

**34.** Appareil selon la revendication 31, dans lequel ledit au moins un paramètre souhaité devant être mesuré est une profondeur ($d_1$, $d_2$) d'au moins une couche de ladite au moins une pile.

**35.** Appareil selon la revendication 31, dans lequel ledit au moins un paramètre souhaité devant être mesuré est une profondeur ($d_2$) d'une partie de perte de métal ($P_i$) résultant d'un polissage mécanico-chimique appliqué à ladite structure.

FIG.1A

FIG.1B

FIG.2

FIG.3

FIG.4

FIG.5A

```
        ┌──────────────────┐
        │    STRUCTURE     │──── 46
        │    EXAMINED      │
        └──────────────────┘
                 │
                 ▼
          ╱─────────────╲                    ┌──────────────┐
         ╱  MEASUREMENT  ╲─── 48      50 ─── │  TEST-SITE   │
        ╱   AREA CONDITION╲──NO──────────────│  PREPARED    │
         ╲   SATISFIED ?  ╱                  └──────────────┘
          ╲─────────────╱
                 │
                YES
                 │
                 ▼
        ┌──────────────────┐
        │    MEASURED      │──── 54
        │  DATA  OBTAINED  │                      52
        └──────────────────┘
                 │
                 ▼
        ┌──────────────────┐
        │   THEORETICAL    │──── 56
        │  DATA  OBTAINED  │
        └──────────────────┘
                 │
                 ▼
        ┌──────────────────┐
        │   MEASURED  &    │──── 58
  60 ──▶│ THEORETICAL DATA │
        │    ANALYZED      │
        └──────────────────┘
                 │
 ┌──────────────────┐
 │  OPTICAL MODEL   │
 │ FACTORS & DESIRED│
 │   PARAMETERS     │
 │    ADJUSTED      │
 └──────────────────┘
          ▲        ▼
          │    ╱─────────────╲ ──── 62
         NO───╱  THEORETICAL  ╲
             ╱ DATA SATISFIES CERTAIN╲
              ╲   CONDITION ? ╱
               ╲─────────────╱
                     │
                    YES
                     │
                     ▼
        ┌──────────────────┐──── 64
        │ CORRECT VALUES OF│
        │  OPTICAL MODEL   │
        │FACTORS CALCULATED│
        └──────────────────┘
                 │
                 ▼
            TO  FIG.5B
```

FROM FIG.5A

OPTIMIZED OPTICAL
MODEL OBTAINED — 66

52

MEASURED DATA
OBTAINED — 70

68

THEORETICAL DATA
OBTAINED — 72

THEORETICAL
DATA SATISFIES THE
CONDITION ? — 74

NO

DESIRED
PARAMETERS
ADJUSTED

YES

DESIRED PARAMETERS
CALCULATED — 76

MEASUREMENT AREA
AT A NEXT LOCATION — 80

FIG.5B

110

112    112

| AIR | PHOTORESIST | AIR | PHOTORESIST | AIR | PHOTORESIST | AIR |

Aℓ

## FIG.6

210

212    212

| AIR | $SiO_2$ | AIR | $SiO_2$ | AIR | $SiO_2$ | AIR |

PHOTORESIST    PHOTORESIST    PHOTORESIST

$SiO_2$    $SiO_2$

Si

## FIG.7

310

312                    312

| AIR | Aℓ | AIR | Aℓ | AIR | Aℓ | AIR |

SiO$_2$

Si

FIG.8

410

412                    412

| W | Ti | W | Ti | W | Ti | W |
| Ti | SiO$_2$ | Ti | SiO$_2$ | Ti | SiO$_2$ | Ti |

Aℓ

FIG.9

510

$d_2$    $P_i$

$d_1$    METAL    SiO$_2$    METAL

METAL

FIG.10